# EUROPEAN PATENT SPECIFICATION

(11) **EP 0 997 863 B1**
(45) Date of publication and mention of the grant of the patent: **11.04.2007**
(21) Application number: 99119321.0
(22) Date of filing: 29.09.1999
(51) Int. Cl.: G09B 27/04

(54) **Improved motorised device for automatically spotting the visible portion of the sky**
Verbesserte Vorrichtung zur automatischen Positionierung des sichtbaren Teils der Himmelskugel
Dispositif amélioré de repérage automatique de la partie visible du ciel

(30) Priority: 13.10.1998 IT TO980189 U
(43) Date of publication of application: 03.05.2000
(73) Proprietor: GAMES CENTRE s.a.s. di RIZZO Giancarlo & c., 10024 Moncalieri, Torino (IT)
(72) Inventor: Rizzo, Giancarlo, 10024 Moncalieri (IT)
(74) Representative: Buzzi, Franco

(56) References cited:
- FR-A- 2 428 882
- FR-A- 2 630 241
- FR-A- 2 675 611
- US-A- 4 012 851

## Description

The product refers to a perfectioned device, in particular, it is motorised and automatic, to spot and to point out the visible portion of sky.

As far as we know, the aspect of the sky, referring to observable stars and constellations, constantly varies during the different hours of day and night, and that at the same hour, from season to season; this is due to the earth rotation movement and to its revolution movement around the sun; moreover, the device already known are manually working.

An example of this type of devices is known i.a. from FR-A-2 630 241.

The aim of the present product is to build a device that could spot and point out the portion of sky currently visible, at any hour and day of the year, and to build temporised engines to make the maps and the engine rotate.

More specifically the invention relates to a device having the features set forth in the preamble of claim 1, which is known e.g. from FR-A-2 675 611.

This target was gained, accordingly to the new invention, by a device having the further features set forth in the characterizing portion of claim 1.

Others characteristics and advantages will be better underlined by the detailed description of one example made referring to the attached drawings, given to indicate and not to limit; in which:
- fig. 1 is a frontal view of the device
- fig. 2 is a section view according to II-II track of fig. 1 and
- fig. 3 and 4 are frontal views that illustrate 2 component of the device.

Referring to figures, such device includes a mobile disc 1 where one of the two hemispheres (boreal or austral) is represented with its stars and constellations, one fixed disc 2, overlapping a mobile disc 1 with a window 3 that delimits and points out a portion 4 of the celestial hemisphere, represented on the mobile disc behind.

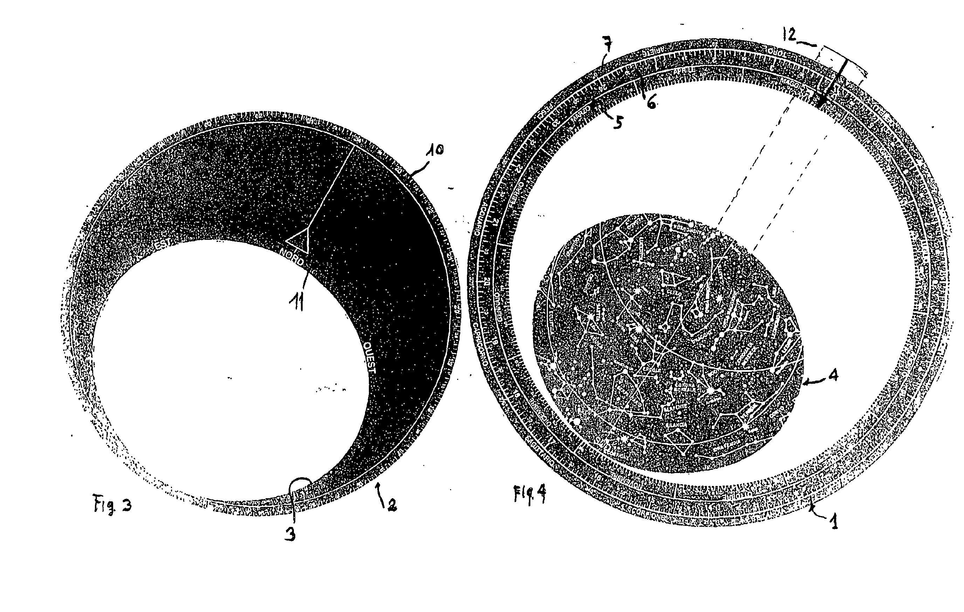

The mobile disc 1, that in fig. 4 is only illustrated the visible portion 4 of sky by overlapping the window 3 and the fixed disc 2, peripherically presents a number of graduate scales in shape of concentric circles, that rotate with the celestial map: one first graduate internal scale 5 is a calendar, there are the days of the year, divided in twelve months; a second intermediate scale 6 is a clock, divides in 24 hours; the third scale 7, has got the zodiac signs, referring to the correspondent periods of the year.

As shown in fig. 2, the mobile disc 1 is controlled in rotation around central axis X that is common to both the discs, through an engine - likely a quartz one 8 - this makes the mobile disc rotate to a constant speed in the opposite side of the hour, making it do turn of 24 hours minus 4 minutes.

The fixed disc 2 has on its external circumference a graduate scale 10 to make it a reference to the hour, and a sign 11 for the 24 hours; the external diameter of the fixed disc 2 is basically congruent to the internal circle of the mobile disc 1.

The window 3 of the fixed disc has an oval shape and is on a decentred position, internally tangent to the disc 2. In the s most preferred shape illustrated in the attached drawings, the part of fixed disc complementary to the window 3 is opaque to hide the portion of sky not visible.

In a second realisation, and not liked, (not illustrated) the window 3 could be substituted by a line of oval shape - the same to window 3 - but on a transparent screen, or by visible oval frame.

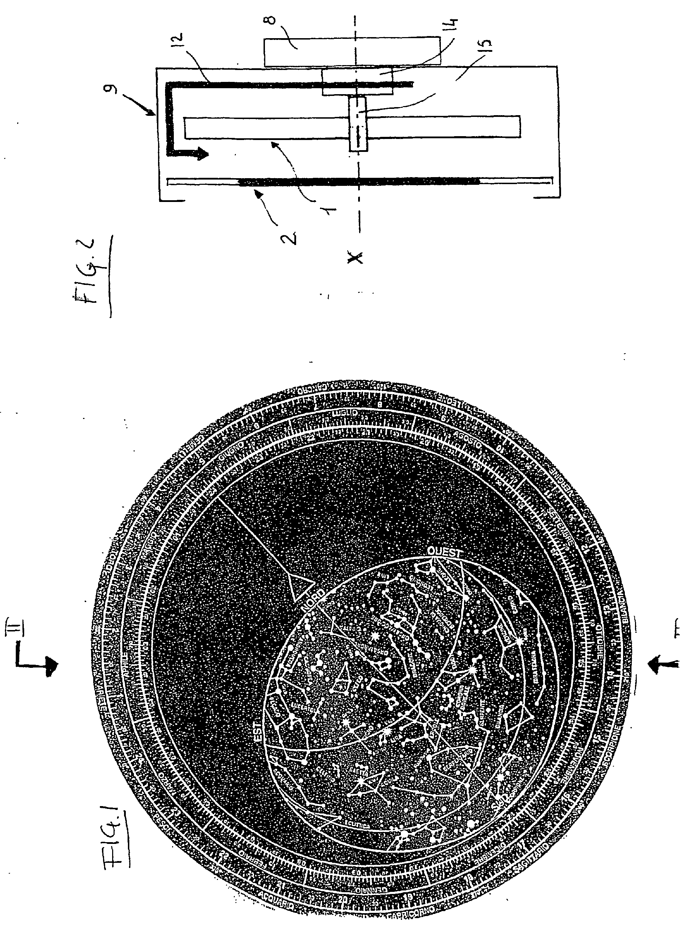

As illustrated in fig. 1, where the fixed disc is overlapped by the mobile disk, the device can visualise at any moment, day of the year, the portion of sky currently visible , the one spotted from, the window 3.

Due to the effect of the rotation of the mobile disc 1, in the window 3 is spotted a portion of sky constantly variable, the one actually visible at that hour and that day.

To know the variation of the position of the celestial map of a terrestrial observer during the year at the same hour, it's necessary to set the mobile disc compared to the fixed disc, should be set at 24 hour, in coincidence to the new date of the day on the calendar circle 5.

This setting or updating, which consists essentially in making rotate each day the mobile disc one sign by one sign, can be done manually or automatically, predisposing the movement system of the mobile disc, so that it goes ahead every 24 hours, of everyday of the year.

In the most preferred realisation, the time device that makes rotate the mobile disc is to rotate completely (360°) in 24 hours minus 4 minutes. So that, the sign referring to the date on the mobile disk, goes ahead every 24 hours of an angle of 360° plus 1/360 (~1/365), which is a sign that is one day on the calendar circle. Thanks to it, at every 24 hours the reference on the fixed disc will match to the new date, one sign ahead (one day) compared to the previous day.

In angular terms, a day corresponds to a rotation of 1/360-1/365 = 4/1440, that is 4 minutes every day (1 day consists of 24 X 60 = 1440 minutes). The difference of 4 minutes includes the variation of the portion of visible sky, at the same hour, in two days.

To clearly indicate the day of the year at any hour - one should observe the device - this include a slider 12 that is a calendar, put in correspondence to the sign of the calendar circle and it follows the mobile disc in its rotation; at any complete turn of the mobile disc, the slider 12 goes one sign ahead - one day- on the calendar circle 5- the updating of the calendar-slider 12 could be manually done or automatically, predisposing the slide of one's own temporised advancing system, synchronised to the one that controls the rotation of the mobile disc 1 - that is one turn in 24 hours.

In the preferred realisation, the cover of the fixed disc 2 is through a transparent screen where can be traced geographic-astronomy coordinates of different type, for example the division of the celestial sphere in meridians and parallels, zenit, cardinal points, and other information.

The representation of the sky on the mobile disc and others information could be glowing through printing the reactive vernish system wood effect- or by carving or any other system and back-glow (not shown in the drawings).

According to the invention, other slides can be eventually thought to be put on the rotating map with indications of the various stars and constellations, for example names or signs to complete the shapes of the constellations for astrological purposes, references to other celestial elements (planets, asteroids, etc.) or other astronomy events, solar cycles and or lunar cycles.

The temporised mechanism 8 and illumination system could be electrically feeded or with batteries, most likely rechargeable.

In the end, the device could have one more elements to hooking 13 it to a wall.

The invention is not limited to the shape here described and illustrated, that is an example; it's according to it's shape, dimension, disposition, of components, constructive and working details.

For example, the shape could be concave instead of flat. The celestial hemisphere represented could be the boreal or austral one, according to the destination of the item.

## Claims

1. Device of perfectioned and motorised type to point out the automatic visible portion of sky; the one including:
a support element (1) with a star map of one celestial hemisphere;
a window (3) overlapping the map and modelled to circumscribe
a portion of the star map, the window being of shape and dimension corresponding to the portion of sky normally visible;
temporised engines (8) set to make the map completely rotate in 24 hours so that the window (3) constantly spots the portion of sky (4)currently visible; the support element of the map and the window could be entered according to the time of the year, whereby
the window (3) is fixed and the support element (1) is mobile and controlled to turn by temporised engines (8), and whereby
the supported mobile element (1) includes a graduated scale (5) as calendar, and the window (3) is solidal to a fixed support (2) with an hour referring sign (11); the mobile support (1) and the fixed one (2) can be both entered to match the hour sign (11) of the fixed support (2) to a determined sign of the calendar (5) at 24 hour of everyday, **characterised in that** the support element (1) is predisposed to advance automatically ahead, one sign by one sign every 24 hours of every day of the year, whereby said sign is one day on the calendar circle (5).

2. Device according to the claim 1, **characterised by** the fact that the fixed support (2) and the mobile one (1) consist of a couple of discs, one of them (1) is controlled in rotation to the other (2) around a common central axis (X).

3. Device according to the claim 2, **characterised by** the fact that the external diametre of the fixed disc (2) is congruent to the internal one of one of the circles of the mobile disc (1) that is the calendar (5).

4. Device according to the claim 1, **characterised by** the fact that the mobile support makes a complete rotation of 360° in 24 hours minus 4 minutes.

5. Device according to the claim 2, **characterised by** the fact that the window (3) is slightly oval and put in a decentrated position internally tangent to the fixed disc (2).

6. Device according to the claim 1, **characterised by** the fact that the part of fixed support (2) complementary to the window (3) is opaque o hide the non -visible portion of sky.

7. Device according to the claim 1, **characterised by** the fact that including a slider (12) with calendar function, which position is to set to the graduate scale (5).

8. Device according to the claim 1, **characterised by** the fact that the temporised mechanism (8) controls a slider (14) and a mobile disc (15) with two concentric motorised parts in 24 hours.

9. Device according to anyone of the previous claims, including geographic-astronomy indications such as division of the celestial sphere in meridians and parallels, zenit, cardinal point, astrological shapes or denominations.

## Patentansprüche

1. Vorrichtung einer perfektionierten und motorisierten Art zum Aufzeigen des automatisch sichtbaren Teils der Himmelskugel; umfassend:
ein Unterstützungselement (1) mit einer Sternenkarte einer Himmelshemisphäre;
ein Fenster (3) die Karte überlappend und gestaltet zum Beschränken eines Abschnitts der Sternenkarte, wobei das Fenster von Gestalt und Größe dem normal sichtbaren Teil der Himmelskugel entspricht;
abwartende Motoren (8) konstruiert, um die Karte in 24 Stunden zu drehen, so dass das Fenster (3) permanent den momentan sichtbaren Teil der Himmelskugel (4) ausmacht; das Unterstützungselement der Karte und das Fenster könnte entsprechend zu der Jahreszeit erfasst werden, wobei das Fenster (3) fixiert ist und das Unterstützungselement (1) mobil ist und gesteuert ist, um durch die abwartenden Motoren (8) gedreht zu werden, und
wobei das unterstützte mobile Element (1) einschließt einen abgestuften Maßstab (5) als Kalender, und das Fenster (3), welches solidal ist zu einer fixen Unterstützung (2) mit einem Stunden entsprechenden Zeichen (11); die mobile Unterstützung (1) und die eine fixierte (2) können beide erfasst werden, um zu dem Stundenzeichen (11) der fixierten Unstützung (2) zu passen zu einem vorherbestimmten Zeichen des Kalenders (5) an 24 Stunden jeden Tag; **dadurch gekennzeichnet, dass** das Unterstützungselement (1) prädisponiert ist, um automatisch vorzurücken, ein Zeichen nacheinander jede 24 Stunden jeden Tag des Jahres, wobei das Zeichen ein Tag auf dem Kalenderkreis (5) ist.

2. Vorrichtung nach Anspruch 1, **gekennzeichnet durch** die Tatsache, dass die fixierte Unterstützung (2) und eine mobile (1) besteht aus einem Paar von Tellern, eine von ihnen (1) ist gesteuert in Drehung zu dem anderen (2) um eine gemeinsame Zentralachse (X).

3. Vorrichtung nach Anspruch 2, **gekennzeichnet durch** die Tatsache, dass der äußere Durchmesser des fixierten Tellers (2) kongruent ist zu dem Inneren eines der Kreise auf dem mobilen Teller (1), welcher der Kalender (5) ist.

4. Vorrichtung nach Anspruch 1, **gekennzeichnet durch** die Tatsache, dass die mobile Unterstützung eine komplette Drehung von 360° in 24 Stunden minus 4 Minuten macht.

5. Vorrichtung nach Anspruch 2, **gekennzeichnet durch** die Tatsache, dass das Fenster (3) leicht oval ist und eingesetzt ist, in einer dezentralen Position den fixierten Teller (2) innerhalb tangierend.

6. Vorrichtung nach Anspruch 1, **gekennzeichnet durch** die Tatsache, dass der Teil der fixierten Unterstützung (2) komplementär zu dem Fenster (3) opak ist, um den nicht sichtbaren Teil der Himmelskugel zu verdecken.

7. Vorrichtung nach Anspruch 1, **gekennzeichnet durch** die Tatsache, dass ein Schieber (12) mit Kalenderfunktion eingeschlossen ist, dessen Position auf dem abgestuften Maßstab (5) gesetzt wird.

8. Vorrichtung nach Anspruch 1, **gekennzeichnet durch** die Tatsache, dass der abwartende Mechanismus (8) einen Schieber (14) und einen mobilen Teller (15) mit zwei konzentrischen motorisierten Teilen in 24 Stunden steuert.

9. Vorrichtung nach irgendeinem der vorhergehenden Ansprüche, umfassen geografisch-astronomische Indikationen wie eine Teilung der Himmelssphäre in Meridiane und Parallele, Zenit, Haupthimmelsrichtung, astrologische Formen oder Kategorien.

## Revendications

1. Dispositif d'un type perfectionné et motorisé pour désigner la partie visible automatique du ciel ; le dispositif comprenant :
un élément de support (1) avec une carte des étoiles d'un hémisphère céleste ;
une fenêtre (3) chevauchant la carte et agencée pour entourer une partie de la carte des étoiles, la fenêtre étant de forme et de dimension correspondant à la partie du ciel normalement visible ;
des moteurs temporisés (8) placés pour faire que la carte tourne complètement en 24 heures de telle sorte que la fenêtre (3) pointe constamment la partie du ciel (4) actuellement visible ; l'élément de support de la carte et la fenêtre pourraient être entrés selon le moment de l'année, dans lequel
la fenêtre (3) est fixe et l'élément de support (1) est mobile et commandé pour tourner par les moteurs temporisés (8), et dans lequel
l'élément mobile supporté (1) comprend une échelle graduée (5) comme un calendrier, et la fenêtre (3) est solidaire d' un support fixe (2) avec un signe (11) désignant l'heure; le support mobile (1) et le support fixe (2) peuvent être tous deux entrés pour correspondre au signe d'heure (11) du support fixe (2) sur un signe déterminé du calendrier (5) à 24 heures de chaque jour, **caractérisé en ce que** l'élément de support (1) est prédisposé pour avancer automatiquement vers l'avant, un signe par un signe chaque 24 heures de chaque jour de l'année, dans lequel ledit signe est un jour sur le cercle du calendrier (5).

2. Dispositif selon la revendication 1, **caractérisé par le fait que** le support fixe (2) et le support mobile (1) consistent en un couple de disques dont l'un (1) est contrôlé en rotation par rapport à l'autre (2) autour d'un axe central commun (X).

3. Dispositif selon la revendication 2, **caractérisé par le fait que** le diamètre externe du disque fixe (2) est congruent au diamètre interne d'un des cercles du disque mobile (1) qui est le calendrier (5).

4. Dispositif selon la revendication 1, **caractérisé par le fait que** le support mobile fait une rotation complète de 360° en 24 heures moins 4 minutes.

5. Dispositif selon la revendication 2, **caractérisé par le fait que** la fenêtre (3) est légèrement ovale et placée dans une position décentrée tangente de manière interne au disque fixe (2).

6. Dispositif selon la revendication 1, **caractérisé par le fait que** la partie du support fixe (2) complémentaire à la fenêtre (3) est opaque pour cacher la partie non visible du ciel.

7. Dispositif selon la revendication 1, **caractérisé par le fait qu'**il comprend un dispositif de coulissement (12) avec une fonction de calendrier, dont la position est destinée à régler l'échelle graduée (5).

8. Dispositif selon la revendication 1, **caractérisé par le fait que** le mécanisme temporisé (8) contrôle un dispositif de coulissement (14) et un disque mobile (15) avec deux parties motorisées concentriques en 24 heures.

9. Dispositif selon l'une quelconque des revendications précédentes, comprenant des indications géographiques d'astronomie telles que la division de la sphère céleste en méridiens et parallèles, le zénith, les points cardinaux, les formes ou les dénominations astrologiques.
